# EUROPEAN PATENT APPLICATION

(11) **EP 4 817 809 A1**
(43) Date of publication of application: **07.10.2026**
(21) Application number: 26162968.7
(22) Date of filing: 06.03.2026
(51) Int. Cl.: B25J 9/16

(54) **INTELLIGENT ROBOTIC CONTROLLER EXECUTING GEN-AI GENERATED TASKS PLANS WITH TASK FAILURE DETECTION AND HANDLING**

(30) Priority: 30.03.2025 IN 202521031407
(71) Applicant: Tata Consultancy Services Limited, Maharashtra (IN)
(72) Inventor: SINGH, Chandan Kumar, 110001 Ghaziabad, Delhi (IN); KUMAR, Devesh, 201301 Noida, Uttar Pradesh (IN); SANAP, Vipul Ashok, 201301 Noida, Uttar Pradesh (IN); SINHA, Rajesh, 201305 Noida, Uttar Pradesh (IN)
(74) Representative: Goddar, Heinz J.

(57) **Abstract**

A method and system for intelligent robotic controller with task failure detection and handling via a multi-level failure handler is disclosed. A validated task plan received from a task planning framework is analyzed to extract set of skills for execution of the task plan. Each skill comprising atomic skills or compound skills. For the set of skills, set of provisioned skill specific behavior tree (BT) nodes are loaded from a set of skill ledgers from a skill library defining execution of the extracted set of skills. BT train is created for the set of skills based on the set of skill ledgers and the set of provisioned skill specific BT nodes. Failure event is detected and handled by multi-level failure handler and replanning of task is routed to robotic controller or task planning framework based on detected failure mapping to the set of preconfigured failures and a failure handling capability.

## Description

### CROSS-REFERENCE TO RELATED APPLICATIONS AND PRIORITY

The present application claims priority to Indian application no. 202521031407, filed on March 30, 2025.

### TECHNICAL FIELD

The embodiments herein generally relate to the field of robotics and, more particularly, to a method and system providing intelligent robotic controller executing Generative Artificial Intelligence (Gen-AI) generated tasks plans with task failure detection and handling.

### BACKGROUND

Robotic applications have penetrated into multitude domains. Robots execute a task in accordance with a task plan. However, for efficient task execution, the task planning has to be effective and domain aware. With Generative Artificial Intelligence (Gen-AI) penetrating in the domain, capability of Large Language Models (LLMs) and a Vision Language Model (VLM) is being widely explored for task planning with domain awareness.

However, accuracy and efficiency of the task being executed is highly dependent on the way the robotic controller executes the tasks. Bringing in intelligence at robotic controller level to handle task failures is being explored. This reduces replanning at task planning framework level.

### SUMMARY

Embodiments of the present disclosure present technological improvements as solutions to one or more of the above-mentioned technical problems recognized by the inventors in conventional systems.

For example, in one embodiment, a method for robotic task execution.is provided. The method includes receiving a validated task plan from a task planning framework, wherein the task planning framework provides the validated task plan for low level execution of a task originating from a user instruction or a goal from a plurality of modalities. Further, the method includes extracting a set of skills comprising a combination of sequential and parallel skills for execution of the validated task plan from among a plurality of skill capabilities of the robotic controller, wherein each skill among the set of sequential or parallel skills comprises a plurality of atomic skills or compound skills. Further, the method includes loading from a skill specific node library, a set of provisioned skill specific behavior tree (BT) nodes for the extracted set of skills. Furthermore, the method includes extracting a set of skills from a skill library defining execution of the extracted set of skills. Further, the method includes creating and loading a BT train for the set of skills based on the set of skill ledgers and the set of provisioned skill specific BT nodes, wherein for each skill among the set of skills, the BT train defines a multi-level failure handling mechanism comprising: a set of preconfigured failures; a set of failure types comprising hardware failures and software failures; and a set of failure handlers, wherein the hardware failures are handled with one or more pre-defined actions and the software level failures are handled by triggering one or more auto correction steps defined during a skill configuration.

Furthermore, the method includes detecting and handling a failure event by a multi-level failure handler associated with the robotic controller, during execution of the validated task in accordance with the BT train, wherein a replanning of the validated task is routed by the multi-level failure handler to one of a robotic controller stage and a task planning framework stage based on a detected failure mapping to one among the set of preconfigured failures and a failure handling capability of the robotic controller. Further, the method includes generating a mitigation strategy by analysing and classifying the one or more failure events based on the node of the BT at which failure is detected.

In another aspect, a system for robotic task execution is provided. The system comprises a memory storing instructions; one or more Input/Output (I/O) interfaces; and one or more hardware processors coupled to the memory via the one or more I/O interfaces, wherein the one or more hardware processors are configured by the instructions to receive a validated task plan from a task planning framework, wherein the task planning framework provides the validated task plan for low level execution of a task originating from a user instruction or a goal from a plurality of modalities. Further, the one or more hardware processors are configured by the instructions to extract a set of skills comprising a combination of sequential and parallel skills for execution of the validated task plan from among a plurality of skill capabilities of the robotic controller, wherein each skill among the set of sequential or parallel skills comprises a plurality of atomic skills or compound. Furthermore, the one or more hardware processors are configured by the instructions to load from a skill specific node library, a set of provisioned skill specific behavior tree (BT) nodes for the extracted set of skills. Furthermore, the one or more hardware processors are configured by the instructions to extract a set of skills from a skill library defining execution of the extracted set of skills. Further the one or more hardware processors are configured by the instructions to create and load a BT train for the set of skills based on the set of skill ledgers and the set of provisioned skill specific BT nodes, wherein for each skill among the set of skills, the BT train defines a multi-level failure handling mechanism comprising: a set of preconfigured failures; a set of failure types comprising hardware failures and software failures; and a set of failure handlers, wherein the hardware failures are handled with one or more pre-defined actions and the software level failures are handled by triggering one or more auto correction steps defined during a skill configuration.

Furthermore the one or more hardware processors are configured by the instructions to detect and handle a failure event by a multi-level failure handler associated with the robotic controller, during execution of the validated task in accordance with the BT train, wherein a replanning of the validated task is routed by the multi-level failure handler to one of a robotic controller stage and a task planning framework stage based on a detected failure mapping to one among the set of preconfigured failures and a failure handling capability of the robotic controller. Further, the one or more hardware processors are configured by the instructions to generate a mitigation strategy by analyzing and classifying the one or more failure events based on the node of the BT at which failure is detected.

In yet another aspect, there are provided one or more non-transitory machine-readable information storage mediums comprising one or more instructions, which when executed by one or more hardware processors causes a method for robotic task execution.

The one or more non-transitory machine-readable information storage mediums includes receiving a validated task plan from a task planning framework, wherein the task planning framework provides the validated task plan for low level execution of a task originating from a user instruction or a goal from a plurality of modalities. Further, the one or more non-transitory machine-readable information storage mediums includes extracting a set of skills comprising a combination of sequential and parallel skills for execution of the validated task plan from among a plurality of skill capabilities of the robotic controller, wherein each skill among the set of sequential or parallel skills comprises a plurality of atomic skills or compound skills or a combination thereof. Further, the one or more non-transitory machine-readable information storage mediums includes loading from a skill specific node library, a set of provisioned skill specific behavior tree (BT) nodes for the extracted set of skills. Furthermore, the one or more non-transitory machine-readable information storage mediums includes extracting a set of skills from a skill library defining execution of the extracted set of skills. Further, the one or more non-transitory machine-readable information storage mediums includes creating and loading a BT train for the set of skills based on the set of skill ledgers and the set of provisioned skill specific BT nodes, wherein for each skill among the set of skills, the BT train defines a multi-level failure handling mechanism comprising: a set of preconfigured failures; a set of failure types comprising hardware failures and software failures; and a set of failure handlers, wherein the hardware failures are handled with one or more pre-defined actions and the software level failures are handled by triggering one or more auto correction steps defined during a skill configuration.

Furthermore, the one or more non-transitory machine-readable information storage mediums includes detecting and handling a failure event by a multi-level failure handler associated with the robotic controller, during execution of the validated task in accordance with the BT train, wherein a replanning of the validated task is routed by the multi-level failure handler to one of a robotic controller stage and a task planning framework stage based on a detected failure mapping to one among the set of preconfigured failures and a failure handling capability of the robotic controller. Further, the one or more non-transitory machine-readable information storage mediums includes generating a mitigation strategy by analyzing and classifying the one or more failure events based on the node of the BT at which failure is detected.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system, for an intelligent robotic controller executing Generative Artificial Intelligence (Gen-AI) generated tasks plans with task failure detection and handling, in accordance with some embodiments of the present disclosure.
FIG. 1B illustrates an architectural overview of the system of FIG. 1A, in accordance with some embodiments of the present disclosure.
FIGS. 2A through 2B is a flow diagram illustrating a method for intelligent robotic controller executing Gen-AI generated tasks plans with task failure detection and handling, using the system depicted in FIG. 1A and 1B, in accordance with some embodiments of the present disclosure.
FIGS. 3A and 3B depicts a functional flow of the method of FIGS. 2A through 2B, in accordance with some embodiments of the present disclosure.
FIG. 4 depicts robotic skill orchestration applied by the robotic controller of system of FIG. 1, in accordance with some embodiments of the present disclosure.
FIG. 5 depicts experimental setup of the system with pick and drop locations, in accordance with some embodiments of the present disclosure.
FIG. 6 is a table depicting qualitative results of task execution performance of the robotic controller, in accordance with some embodiments of the present disclosure.
FIG. 7A and 7B is an example Behavioral Tree (BT), in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system providing an intelligent robotic controller executing Generative Artificial Intelligence (Gen-AI) generated tasks plans with task failure detection and handling via multi-level failure handler. The system comprises a task planning framework that generates a validated task plan. The task planning framework is a Generative Artificial Intelligence (Gen-AI) powered block. For example, the task planning framework can be built using a Large Language Model (LLM) or a Vision Language Model (VLM). The validated task plan is received by the robotic controller, which then extracts a set of skills for execution of the validated task plan. The set of skills comprising a combination of sequential and parallel skills selected from among a plurality of skill capabilities of the robotic controller. Each skill comprises atomic skills or compound skills. For the extracted set of skills, a set of provisioned skill specific behavior tree (BT) nodes are loaded from a set of skill ledgers from a skill library defining execution of the extracted set of skills. As well known in the art, a behavior tree (BT) is a mathematical model of plan execution used in computer science, robotics, control systems and video games. They describe switching between a finite set of tasks in a modular fashion. Their strength comes from their ability to create very complex tasks composed of simple tasks, without worrying how the simple tasks are implemented.

A BT train is created for the set of skills based on the set of skill ledgers and the set of provisioned skill specific BT nodes. Further, during execution of the validated task plan, a failure event is detected and handled by a multi-level failure handler of the robotic controller. On detection of failure, the replanning of the task is routed to robotic controller stage or the task planning framework stage based on the detected failure mapping to one among the set of preconfigured failures and a failure handling capability of the robotic controller. A mitigation strategy is executed by analyzing and classifying the one or more failure events based on the node of the BT at which failure is detected.

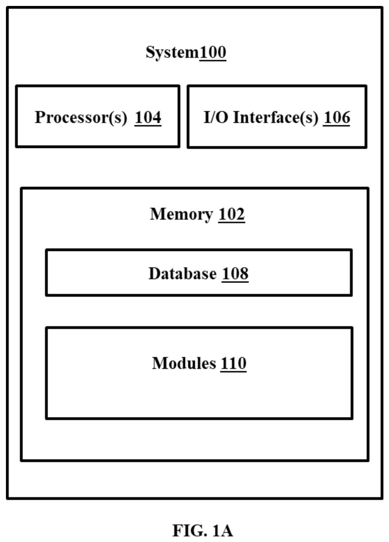

Referring now to the drawings, and more particularly to FIGS. 1A through 7B, where similar reference characters denote corresponding features consistently throughout the figures, there are shown preferred embodiments, and these embodiments are described in the context of the following exemplary system and/or method.

FIG. 1A is a functional block diagram of a system 100 robotic controller 112for task failure detection and handling via multi-level failure handler, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface (GUI) or UI 106A and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as the task planning framework 110A, a multi-level failure handler and so on.

The plurality of modules 110 include programs or coded instructions that supplement applications or functions performed by the system 100 for executing different steps involved in the process of 'task' failure detection and handling via multi-level failure handler, being performed by the system 100. The plurality of modules 110, amongst other things, can include routines, programs, objects, components, and data structures, which perform particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted piece of code for refinement and data that is processed, received, or generated as a result of the execution of the plurality of modules in the module(s) 110.

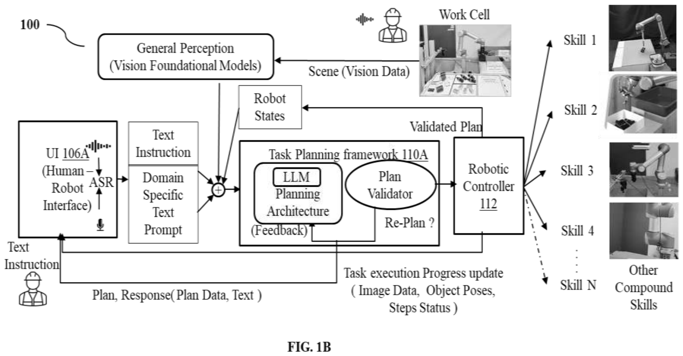

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in in FIG. 1B through FIG. 5.

FIG. 1B illustrates an example system 100 with an architectural overview of the system 100 of FIG. 1A, in accordance with some embodiments of the present disclosure. The key components of the example architecture of the system 100 such as a robotic controller 112, a task planning framework 110A, and Human Robotic Interface - a User Interface (UI) 106A executed by the one or more hardware processors 104 are elaborated below. A user instruction in natural language, specifying a task to be executed by the robotic controller 112, is received via the UI 106A. The task planning framework 204 or the task planner 110Agenerates a validated task plan to be communication to the robotic controller 112 for execution. The task planning framework 110A can be built using a Large Language Model (LLM) or a Vision Language Model (VLM). However, the robotic controller is not limited to receiving task planning from the LLM or the VLM. The robotic controller 112 acquires the scene of execution to analyze the successful execution or detect failure events and further address the failure with replanning of the task plan via an intelligent multi-level failure handling mechanism executed at the robotic controller 112 end. If failures detected are not addressable at the robotic controller 112 end they are routed to the task planning framework 110A. The execution of the task is displayed on the UI 106A for the user.

Example Architecture of the system 100:
General Perception: To assist the task planner 104 with vision guidance, a general perception component is utilized. This component is tasked with providing real-time workspace or scene information to the task planning framework 110A, for example herein the LLM-powered task planner. In an example embodiment the LLM-powered task planner is a LLM- Robotic System Planning Framework (RSPF) as disclosed in applicants Indian Patent Application No 202421096220, filed on 5 December 2024, and titled "LLM BASED TASK PLANNING FRAMEWORK FOR A ROBOT FOR EXECUTION OF DOMAIN SPECIFIC USE CASES (DSUs)". The LLM framework used in the patent application above is also referred to as is a LLM-Robotic System Planning Framework (RSPF).

The scene information captured via the general perception component may include object-related details, object counts, scene semantics, and workspace identifiers. This component employs a vision foundational model based on open-vocabulary object detection. Several models are available for this purpose, including CLIP, SAM, and PointclipV2.

Task planning framework 110A or the task planner: This serves as the central module for generating executable task plans in response to user queries. The task planner's primary functions include receiving and validating user queries, performing comprehension and reasoning, and formulating task plans that adhere to a predefined set of domain rules. This module is powered internally by a contextualized LLM. Key attributes of this contextualized LLM that render it effective for task planning include its capacity to understand human language, classify user queries according to system definitions, reason through and decompose queries into specific task sequences. Additionally, its common sense knowledge regarding everyday objects and tasks learned from extensive internet data, makes it suitable for effective task planning. It can also generate structured and predefined responses that facilitates post-processing and filtering, ensuring system safety and operational compliance. The response or task plan generation template utilized by this task planner includes skill information and their respective sequences. Each skill in the task plan is defined by a set of attributes, with a typical skill-level definition denoted by STₖ, where attri represents the i-th attribute associated with the k-th skill. These attributes may include object-related information, counts, locations, etc. TP_{k,}STₖ specifies the data format for skill definitions and their sequence within the task plan, while the final task plan is represented by TP. Details regarding skills and their attributes are elaborated in the following section.

The task planning framework 110A requires following inputs to create a task plan: (a) User query, (b) General perception output, (c) High-level current robot state, (d) System prompt, and (e) Use case and operation-specific domain rules. Initially, the LLM processes the user query along with the other listed inputs and classifies it according to system requirements into one of the following five classes: Valid query, which has all the relevant information for the successful execution of a task. Invalid query, which is impossible to get executed using the system's capabilities. General query, which is generic in nature and not related to the task execution. Additional data request (ADR), which requires additional information for execution of a skill. System information query (SIQ), which seeks system related information such as workspace details, skill information, etc. If a user query falls under a valid classification then, a corresponding task plan is generated. In case of other classifications according to measure as explained above, it is taken based on the default LLM capability. Once the response is generated by the LLM, it is sent for validation in the plan validation module.

Plan Validation: To address the unpredictability and potential misinterpretation of user queries, a plan validation block is employed. This rule-based mechanism is primarily responsible for ensuring system safety. It prevents the robotic controller 112 from executing out-of-bound task plans or plans containing unsafe actions that may arise from misunderstandings of user instructions. For example, the plan validation module may include rule-based checks to validate skills and their attributes, ensure compliance with maximum step limits, and adhere to hardware constraints.

Training Module and Task Planner Tuning: Initially, the LLMs are prepared using elementary prompts that provide contextual descriptions of the system. Various methods exist for contextualizing LLMs, including pre-training, finetuning, and employing embedding or retrieval-augmented generation techniques. However, these approaches often require substantial computational resources or large datasets, making them expensive. In contrast, the system 100 approach seeks to achieve similar objectives for DSTs by leveraging zero or few-shot LLM prompting, thereby significantly reducing costs. Consequently, several standard prompting techniques have been employed to craft efficient prompt messages, ensuring the generation of cost-effective and optimal task plans. These techniques include the use of placeholders and specific symbols for contextual partitioning, emphasizing the textual positioning of critical domain rules, introducing tone/style and audience considerations, and specifying context through priming. Additionally, recursive criticism and improvement are implemented to enable the LLM to perform self-review and refinement of its outputs.

Robotic controller 112: The skill execution is done using this component. The two key aspects of the robotic controller 112 are:
1) Skills: A skill is generally defined as a fully matured supervised or unsupervised method for robotic manipulation. Each skill comprises a combination of several atomic skills, such as see, move, pick, and place, and possesses its own reactive abilities for perception and manipulation. A skill can autonomously execute a standalone task. The rationale for designating a primitive skill as a compounded skill (also referred to as compound skill) is to enhance the system's capability to address a range of complex DSTs that require low latency, high throughput, accuracy, repeatability, and a high success rate. Example compound skills include pick and place, too change, open and close the drawers and so on. Additionally, employing compounded skills as primitive skills simplifies the complexity of planning for the task planning framework 110A.

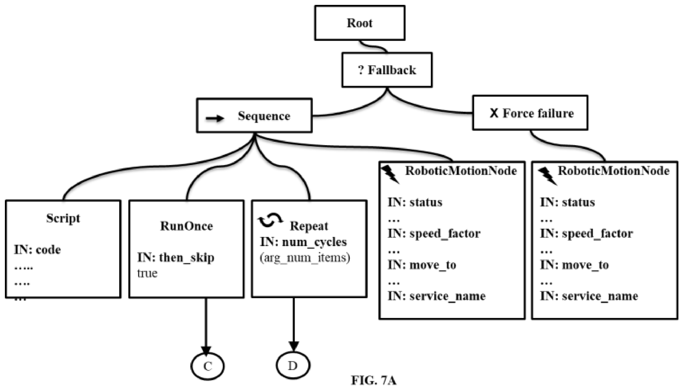

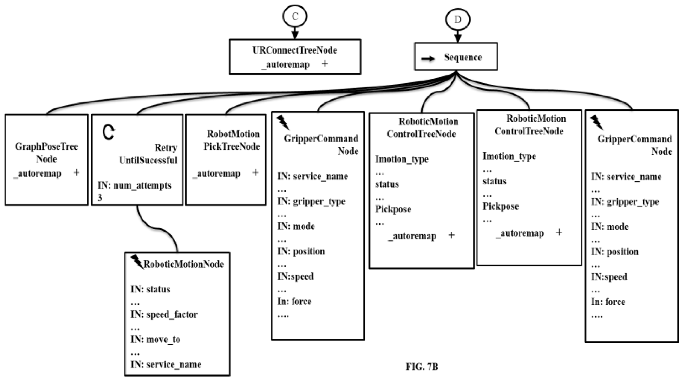

Skill execution and orchestration: The robotic controller is responsible for the effective execution and orchestration of skills. This component provides the intelligence needed for managing all compounded skills. It handles various aspects of execution of system 100, such as notifying users of failures, recording and displaying commentaries from high-level components of the skills, and more. Rather than merely forwarding execution failures to the task planner for re-planning, the controller performs a local Re-Plan using its own intelligence. This approach significantly reduces the frequency of Re-Plan requests and minimizes latency. The implementation of the robotic controller 112 is achieved using Behavior Trees (BTs) well known in literature. This choice provides modularity, facilitates the integration of new skills, enhances module reusability, and simplifies error handling. FIG. 7A and 7B ( collectively referred as FIG. 7) is an example Behavioral Tree (BT).
2) UI 106A: The primary responsibility of the user interface (UI) is to facilitate interaction between the user and the system 100. This interface, powered by the LLM, handles user instructions in various modalities, including text input via keyboard or audio input through a microphone. The UI conveys the output generated by the task planning framework 110A to the user in both text and audio formats. Additionally, the UI is crucial for notifying users of any failures that occur during task execution and for incorporating user feedback.

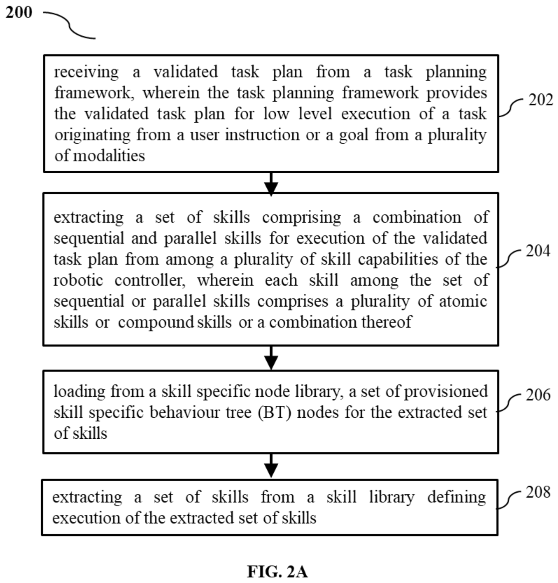

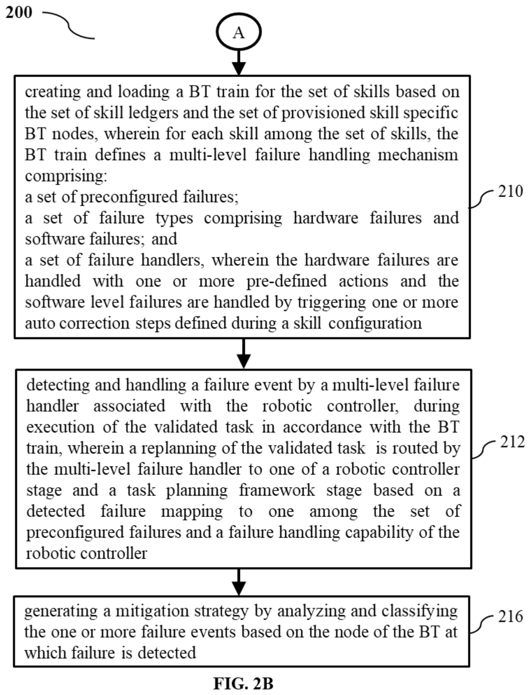

FIGS. 2A through 2B is a flow diagram illustrating a method 200 for intelligent robotic controller executing Generative Artificial Intelligence (Gen-AI) generated tasks plans with task failure detection and handling, using the system depicted in FIG. 1A and 1B, in accordance with some embodiments of the present disclosure.

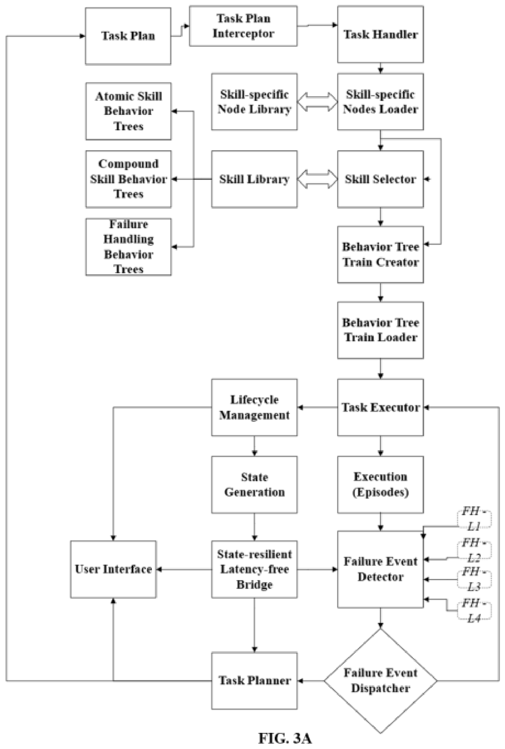

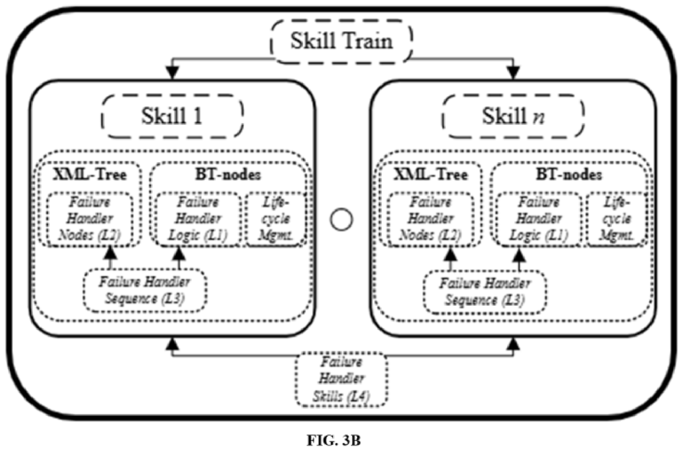

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIGS. 2A through 2B and FIGS. 3A and FIG. 3B. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the FIGS. 3A and FIG. 3B and the steps of the method 200, at step 202 of the method 200, the one or more hardware processors 104 controlling the robotic controller 112 are configured by the instructions to receive the validated task plan from the task planning framework 110A. The task planning framework provides the validated task plan for low level execution of a task originating from a user instruction or a goal from a plurality of modalities. As already detailed in LLM-RSPF of Indian Patent Application No: 202421096220, the task planner ( task planning framework) 110A takes user instruction in natural language as an input along with other inputs such as general perception (scene information), robot states, system states, etc., to generate a task plan that comprises sequences of small tasks that robotic controller can perform. Thus, the plan generated by the task planner 110A is sent for low-level execution of all the tasks within the task plan. As depicted in FIG. 3A, the robotic controller 112 is coupled to the task planning framework 110A via a State-resilient Latency-free Lightweight (SLL) bridge that re-routes a plurality of states of the robot to User Interface (UI) through a State-to-Element Adapter, wherein the plurality of states are identified via a Stateful engine. The SLL bridge is a peripheral node that continuously runs throughout the system execution with data interceptors for intermodule communication. It has interception with all the task planner, robotic controller, and user interface to re-route stateful information to each of these modules. It monitors different execution states that Task Executor generates about different skills, behaviour, etc., forwards ahead to user interface through State-to-Element adapter. Based on the stateful flags the adapter maps/chooses specific frontend element-related choices that will accurately sync-in with the actual execution and execution flows displayed in the user interface. It is state-resilient as it directly connects to failure event dispatcher as well to dispatch any unnoticed or inconsistency in states. It is carefully coded to be light and to not persist any data locally or perform any substantial processing, to reduce latency.

In an example embodiment the LLM-powered task planner is the LLM-RSPF and is as disclosed in applicants Indian Patent Application No 202421096220, Filed on 5 December 2024, titled "LLM BASED TASK PLANNING FRAMEWORK FOR A ROBOT FOR EXECUTION OF DOMAIN SPECIFIC USE CASES (DSUs)".

Thus, generating the valid task plan by the LLM-RSPF for execution by the robotic controller comprises:
a. Receiving a user instruction in natural language through a Human-Robot User Interface (UI) of the LLM-RSPF.
b. Generating a task plan using a chain of hierarchical thought (CoHT) prompt structure augmented with a robotic system ontology configured for domain-specific task planning and approach for prompt tuning.
c. Validating the task plan using one or more heuristics checks for presence of predefined one or more unsafe operations to generate the validated task plan.

The validated task is also processed via a task plan interceptor for performing preliminary validations before executing task plan generated by the LLM-powered task planning framework 110A.

At step 204 of the method 200, the one or more hardware processors 104 controlling the robotic controller 112 are configured by the instructions to extract a set of skills via a task handler of FIG. 3A. The set of skills comprises a combination of sequential and parallel skills for execution of the validated task plan from among a plurality of skill capabilities of the robotic controller. Each skill among the set of sequential or parallel skills comprises a plurality of atomic skills such as see, move, pick, and place, and possesses its own reactive abilities for perception and manipulation. Additionally, the single skill may include compound skill such as open and close the drawers, pick and place and the like or a combination thereof.

At step 206 of the method 200, the one or more hardware processors 104 controlling the robotic controller 112 are configured by the instructions to load, via a skill specific nodes loader from a skill specific node library, a set of provisioned skill specific behaviour tree (BT) nodes for the extracted set of skills. The skill specific node library contains a set of skill-specific nodes (logic) that are available to load.

Each Tree in BT ( as depicted in FIG, 7A and 7B) is essentially an XML file (an XML configuration defining sequence of success and failure executions in a modular way). It serves as a modular arrangement of skill-specific nodes that encapsulate complete behaviour of any skill. Now, when defining the tree, we utilize the provision of "BT Nodes" to encode the "Business Logic" for all skill-specific nodes. For e.g., in a tree for "SEE" skill, there can be skill-specific nodes such as:
1. <ObjectDetect>
2. <ObjectSegment>
3. <HumanDetect>

So, individually these tags are skill-specific Nodes. They all are loaded at once so that the Tree that is combination or decisive sequences of these tags can be re-configurable and created/modified accordingly (as required).

Skill library refers essentially these "Trees", which are decisive sequences of these tags depending on what skill is. Skills can be SEE, PICK, PLACE, DROP, etc.

At step 208 of the method 200, the one or more hardware processors 104 controlling the robotic controller 112 are configured by the instructions to extract a set of relevant skills from a skill library defining execution of the extracted set of skills.

As depicted in FIG. 3A, the skill library contains a set of LLM or Generative AI (Gen AI) compatible skill ledgers that are available to load and execute the skill. The skill ledgers include:
1. Atomic skill BT-based XML structure comprising skill-specific nodes
2. Compound BT-based XML structure comprising skill-specific nodes and typically can be a combination of atomic skill BTs
3. Provision of failure handling BT-based XML structure comprising skill-specific nodes

At step 210 of the method 200, the one or more hardware processors 104 controlling the robotic controller 112 are configured by the instructions to create and load a BT train for the set of skills based on the set of skill ledgers and the set of provisioned skill specific BT nodes. For each skill among the set of skills, the BT-based skills are loaded in sequential manner as arranged in task plan. The BT train defines a multi-level failure handling mechanism comprising:
i. a set of preconfigured failures;
ii. a set of failure types comprising hardware failures and software failures; and
iii. a set of failure handlers, wherein the hardware failures are handled with a pre-defined actions and the software level failures and handled by triggering auto correction steps defined during skill configuration.

Multi-level failure handlers are implemented via two types of steps namely, detection and handling.

For detection, the definition of all failures is preconfigured at the skill configuration time. During execution, at any stage if the outcome data matches the failure pattern a failure gets detected. The detection of failure is of two types - system/hardware failures, and software failures or the logic level failure.

Handling a failure: The hardware failures are dealt with a pre-defined steps as required and declared at the time of system setup. However, for software/logic level failures, the controller triggers several auto correction methods as defined at the skill configuration time. An example could be, in case during the execution of compound skill of 'pick and place' if the camera feed is not coming to the perception (see) algorithm, a hardware failure will be detected and fixed set of steps will be provided to the user for handling of this failure through the UI. Similarly, in a scenario where a failure happens when the robot is unable to pick the object due to its physical appearance or due to very high clutter, then the robot will detect a slip through the sensors or hardware. To handle this the robotic controller 112 may perform multiple attempts or alternatively implement a new strategy where a robot would perform some action to declutter or change the scene so that the robotic controller 112 finds it easier to pick the object. Finally, if in any case, based on the failure handler logic the robotic controller 112 is unable to pick the object it can ask for human help if that provision is enabled at the time of skill configuration or setup stage.

As depicted in FIG. 3B, all the pre-configured failure handling settings and run-time failure auto-correction triggers is performed at 4 levels:
L1: Here, critical errors flags are generated to warn the Robotic Controller about failures in core functional logic. L1 at the BT-node-level handles failures from the functional ROS2 services that any atomic skill is tied to. This is heuristically handled and is essentially a custom logic programmed against each atomic skill. For instance, "See" being a standalone atomic skill to detect an object, false detections (positives and negatives) or empty scene where no objects are present could be considered under L1. Some of the L1 failures are:
   1. CAMERA_BAD_DATA
   2. PERCEPTION_SCENE_EMPTY
   3. PERCEPTION_BAD_POSE
   4. TARGET_OBJECT_NOT_FOUND
   5. ROBOT_PLANNING_FAILED
   6. TARGET_OBJECT_DROPPED
   7. ROBOT_MULTIPLE_PICKS
L2: Here, specific failure BT-nodes to provision customized mitigation tied against L1-level failures. Suppose there can be a <HandleRobotMultiplePickNode> or <HandlePerceptionBadPose> as a failure handling skill-specific node to handle the failure. Note, L1-level failure can also act merely as a failure trigger/signal, however, L2-level failure handling settings actually comprises logic to act upon the failure identified. For instance, if repeatedly Robotic Controller is receiving a bad picking pose against the target object, then, a Disperse/De-clutter action as a fallback can be executed to alter the scene such that the possibility of getting a good picking pose increases in subsequent picking cycles. In such cases, multiple executions of same BT sequence are needed, however, with altered settings, which is accomplished at L2-level through skill-specific failure handler nodes. Another example is, sometimes having stricter or rigid robot motion planning constraints results in consecutive planning failures, which can be avoided by relaxing those constraints based on the historic attempts and task priority.
L3: Here, failure handing between sequencing of multiple atomic skill nodes within a compound skill is achieved by using Behavior Tree library providing options such as SkipIf, Fallback nodes, etc. For instance, DIPS as a skill comprises multiple atomic skills such as See, Plan, Grasp, Pick, Place, etc. Now, the intra-skill failure handling is done using high-level fallback options provided by BT library. SkipIf can be used to check a negative condition over an entire atomic skill and skip a subsequent atomic skill in case any given condition is satisfied.
L4: Here, failure handling is performed between sequencing of multiple compound skills within a skill train (task plan sequence) using lifecycle states of the previous skill and system current state to decide whether it is worth executing the next skill or any other re-routing is needed from the Task Planner to opt for another skill or change the skill (Skill Change Request). For instance, to address unforeseen or environment uncertainties, L4-level failure handling comes into the picture. For instance, when a specific skill has exceeded its maximum Re-tries or attempts then, in the interest of time, a Skill Change Request is raised by re-routing back to Task Planner to re-evaluate the scene and come up with appropriate task plan sequence. The reason being the environment might have been altered in such a manner that now objects in the scene can only be picked by a different skill and a skill change would be needed.

At step 212 of the method 200, the one or more hardware processors 104 controlling the robotic controller 112 are configured by the instructions to detect and handle a failure event by the multi-level failure handler during execution of the validated task in accordance with the BT train. The failure detection and handling are performed on inputs that can be received from four different levels of the multi-level failure handling mechanism, also referred to as multi-level failure handles. A replanning of the task is routed by the multi-level failure handler to one of robotic controller stage and the task planning framework 110A stage based on the detected failure mapping to one among the set of preconfigured failures and a failure handling capability of the robotic controller.

The intelligence and efficiency brought into the robotic controller 112 by routing decision of the failed task by the multi-level failure handling mechanism or multi-level failure handler is explained below with an example.

For instance, one has asked robot to pick a 'juice tetra pack' and give it to a user. Here, the task planning framework 110A generates a valid task plan and to be executed by the robotic controller. Upon receiving the validated task plan, the robotic controller 112 identifies the skills and initiate 'picking' action post object detection. Suppose the picked object drops from the grip of the robotic controller 112 it will be detected as failure event.

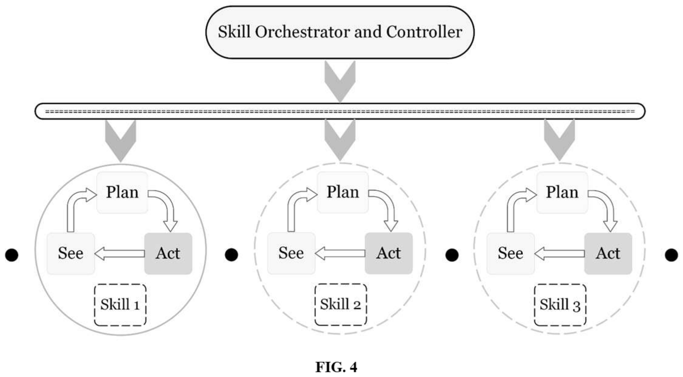

Now, to handle this detected failure event, ideally, the robotic controller 112 should stop and return and attempt another object pick and complete the task by handing the picked object over to the user. One way of handling it is routing this as a failure to the task planning framework 110A and then, again, generating a plan. However, the system 100 herein provides the failure handling at the level of the robotic controller 112. For a specific Domain Specific Usecase (DSU), all plausible fundamental and DSU-hinged failures are first identified and classified. With a combination of native heuristic-based failure handling and Behaviour Tree fallback features the failure is handled. For instance, here, when the tetra pack drops the node returns the Behaviour Tree failure Picking Failure and then, Behavior Tree re-executes the whole Robotic Skill of "See-Plan-Act" as depicted in FIG. 4.

FIG. 4 depicts skill orchestration, which pictorially describes the execution of robotic skills (or simply skills) using a skill train that indicates the task plan sequence. 'Skill orchestration' in robotics refers to the process of coordinating and managing individual robotic "skills" (pre-programmed actions or functionalities) to create complex, automated workflows by combining them in a logical sequence.

FIG. 4 can be understood with an example of DIPS (domain-independent picking skill). DIPS is a skill used to perform picking in domain-independent homogeneous scenarios (low-mix high-volume). Here, DIPS is a matured un-supervised method that follows See-Plan-Act principle. It first uses perception to detect the target object It then, localises the object and generates the robot motion trajectory against the localisation. Lastly, it acts on the generated trajectory to actually execute the flow.

Referring to the FIG. 4, based on the validated task plan from the task interceptor the Behaviour Tree "ticks" the corresponding robotic skill. As well understood, the "tick" is a terminology used in Behaviour Tree to "initiate" and "run" the Robotic Skill as a node. Each Robotic Skill as shown in the figure follows matured "See-Plan-Act" actions. Once the given Robotic Skill is completed then, the next task is executed based on the task plan sequence. In case of failure, the Re-Plan execution happens.The robotic controller 112 handles the detected failure using native failure handling heuristics. This failure handling heuristics is natively defined at each node-level. Each robotic skill is modularized into a combination of several atomic skills, i.e., a compounded robotic skill is adopted, which is matured enough. Now, a typical compounded robotic skill has several nodes (atomic skills). Each node will return natively a failure or success and a rule-based heuristics are provisioned for these atomic nodes. These nodes atomically provide their own failure states.

At step 214 of the method 200, the one or more hardware processors 104 controlling the robotic controller 112 are configured by the instructions to generate a mitigation strategy by analyzing and classifying the one or more failure events based on the node of the BT at which failure is detected.

The classification is based on which Behavior Tree node is giving the failure. If the "Pick" node is giving failure then, it is a picking failure. Is during detection it is giving failure then, it's a "See" failure.

### EXPERIMENTS AND RESULTS:

The system 100: The efficacy of the architecture of the system 100 can be understood by realizing it on a domain specialized pick and place task. The pick and place system has application in packaging, logistics, order fulfillment, retail, and manufacturing industry. The system 100 can also be tuned to solve specific automation tasks in the service industry.

Problem Statement: It is assumed that a robot (Primary) or the system 100 works in a shared workspace with a human and a secondary robot. The objective of the primary robot is to receive and understand any natural language query/instruction from a human, act upon it adhering to the domain rules of the use-case, and robot states, and finally execute it successfully within the acceptable tolerance-level delivering high throughput, success rates, and low latency.

Use-case Description: The use-case is of an order fulfilment, where a robot pick objects from multiple bins based on a user query. The use-case is inspired from Goodsto-Picker Model. There are 3 pick and drop locations, and 3 skills to be used by the Pick and Place system to achieve the objective mentioned in problem statement. Pick location includes 3 bins: Bin1, which contains a heterogeneous set of objects from high mix low volume categories to optimize space utilization; Bin2, which contains a homogeneous set of frequently ordered objects; and Bin3, which also contains a different set of homogeneous frequently ordered objects. The order of these bins can be changed at runtime, with General Perception ensuring the nature of bins before executing any user query. Drop location includes 3 drop points: Drop1, a flat belt conveyor transferring objects to a secondary robot; Drop2, a box for shipment, packaging, or order fulfillment; and Drop3, a fixed location for user retrieval. Robotic manipulation Skills designed and implemented for solving the bin-picking use-case are:

Domain-independent picking skill (DIPS): DIPS is a pick and place skill having an un-supervised learning-based perception capability. It is advantageous in a scenario when the system has to adapt quickly with respect to new objects without any kind of deep learning-based training. The DIPS is very useful for homogeneous bin items as the items from those bins can be changed entirely and the system can quickly adapt with it.

Instance retrieval picking skill (IRIS): IRIS uses supervised learning-based perception capability to perform picking for a domain-dependent environment, where the target object (to be picked) attributes such as name or class/label are known in prior. It has accurate and reliable perception capability leading to its beneficial use in high mix low volume scenario.

Automatic tool change skill (ATCS): A custom manipulation skill used to move the arm between two points following a specific behavior (speed and force). The ATCS is responsible for changing the EOAT from suction to a two-finger gripper and vice versa. The DIPS uses Robotiq 2f-85 (two finger gripper) as the EOAT to grasp objects, whereas the IRIS uses Robotiq Epick (vacuum gripper). However, this is not a mandatory criterion for the skills to be executed in normal scenario.

General Perception: To implement the general perception capability for this system, a Mask R-CNN-based detection is used. This choice is made as the number of stock keeping units (SKUs) is not very high. For a scenario where the number of SKUs is high, CLIP-based open vocabulary detection are used. The general perception module captures the homogeneity and heterogeneity of objects present in the bins.

Task Planning framework (Task planner) 110A: This module uses a 3-step plan generation method comprising (1) Instruction classification, (2) Plan generation, and (3) Plan validation. The skills as defined above have following attributes:
(a) DIPS: ["dips", "object_count", "pick_location", "drop_location"]
(b) IRIS: ["iris", "object_count", "object_name", pick_location", "drop_location"]
(c) ATCS: ["atcs", "current eoat", "next_eoat"].

The LLMs employed in task planner are variants of GPT, models accessible through the OpenAI^{™} API. The structure of the system prompt message is set according to the use-case description mentioned above and previously described strategies to achieve a performance value acceptable for this system, i.e., Precision: 1.0 and Recall: 1.0.

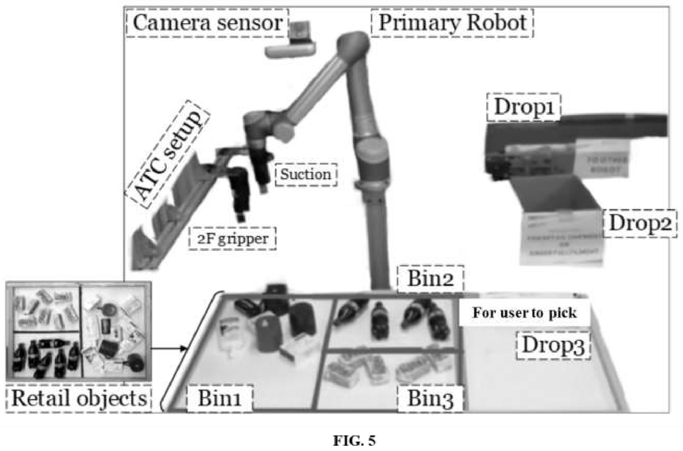

Robotic controller 112: The robotic controller is built on ROS2 Humble^{™} using BTs. The controller is responsible for the effective orchestration of the three skills, i.e., DIPS, IRIS. FIG. 5 depicts the experimental setup with pick and drop locations and ATCS. Also, the local skill execution failure handling is implemented at the robotic controller 112 layer.

User Interface 106: The UI 106A has been developed to encapsulate the system 100, providing enhanced user interaction. The UI 106A captures various system failures be it a hardware or software level, and notifies the user through the UI elements. Also, a set of system failure classifications and their remedy suggestions for the user are also crafted and used in the system 100.

Experimental Setup: The experimental setup is visually represented in FIG. 5. Two industrial arms from Universal Robots are used and called as primary robot (UR-5) and secondary robot (UR-10). The picking locations as shown are essentially bins containing various retail objects. Intel RealSense D455, a RGB-D camera sensor used to provide the perception ability to DIPS, IRIS, and task planner. It is mounted directly on top of all the 3 bins providing a sufficient depth map of the workspace. A GPU system with 8GB GPU Memory (RTX 1080Ti) and 32GB RAM with a 25Mbps internet connectivity is used for running the computation.

Dataset: To test the efficacy the system 100 on the domain specific guided order fulfilment task, a dataset of 30 instructions is created.

Task Executions by Robotic controller 112: Skill executability test (SET) is performed on the 3 domain specialized skills. This ensures that the employed skills are suitable enough for the direct implementation for a DST. The SET validates the standalone skill capabilities by performing several trials and capturing their success rate. The SET results is presented in the Table 1, , which also tabulates cycle time and failure reasons. The cycle time here denotes the skill execution time. A success rate of 96% or more enables them to be integrated with the Robotic controller 112.

**Table 1**

| Skills | Trials | Success rate | Cycle time | Failures |
|---|---|---|---|---|
| DIPS | 25 | 96% | 25 sec | 1 (bad pose) |
| IRIS | 25 | 96% | 30 sec | 1 (bad pose) |
| ATC | 25 | 100% | 30 sec | 0 |

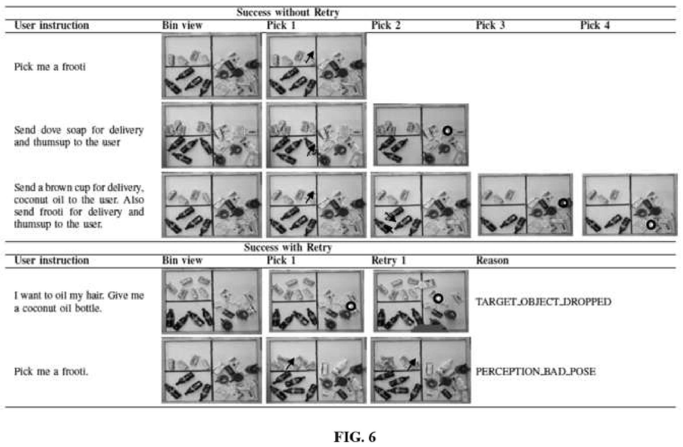

FIG. 6 shows the qualitative results demonstration of the robotic controller 112. The table shows skill execution results against a user query. The arrow shows 2f-gripper pose for DIPS and a circle with a white dot indicates suction pose for IRIS. FIG. 6 shows the output of perception for each pick operation post plan generation against 5 user queries from different difficulty levels. Rows 4 and 5 depict the cases when a robot ( the system 100) handles failure at the robotic controller 112-level by identifying the failure and retrying based on the feedback from the system. Note that there are also failures which the robotic controller 112 cannot resolve, such as when the object slips and falls on the ground. In such a case, the robot (system 100) cannot retrieve the same object; rather, it would re-attempt to pick another instance of the same object class.

Performance Results of the Overall System: Based on the results in Table 2 the system's accuracy without retry (Success / Trials) is 98.75%, while with retry (Success -Retry / Trials) is 92.50%.

**Table 2**

| Task planning evaluation for different query category | | | | |
|---|---|---|---|---|
| Category | Classification | | Plan | |
| | Precision | Recall | Precision | Recall |
| Easy | 100% | 100% | 100% | 100% |
| Medium | 98% | 93% | 100% | 100% |
| Hard | 100% | 100% | 100% | 100% |

Success with retry accounts for scenarios where retry attempts at the controller level result in task completion. Regarding operational latency, the total time for a single pick operation includes the latency associated with general perception, task planning, and skill execution perception and path planning. Table 3 presents the average latency for 3 types of query categories, along with the latency for each component.

**Table 3**

| Category | | Average cycle time (seconds) | | |
|---|---|---|---|---|
| | Planner | Perception | Picking | Controller |
| Easy | 9.38 | 6.64 | 12.01 | 36.92 |
| Medium | 10.89 | 10.84 | 26.20 | 71.94 |
| Hard | 22.61 | 22.69 | 44.14 | 111.08 |

It is important to note that the latency for the task controller, as shown in the table 3, reflects the average time taken by the BT to execute all skills, including retries and failures. Task planning latency is influenced by internet speed due to the reliance on the OpenAl API. This variability could be mitigated by using in-house LLMs finetuned on domain-specific data. Another significant factor affecting system latency is the path the robot follows to pick and drop an object. Currently, the distance between pick and drop locations ranges from 0.40m to 1.5m, which introduces additional time. Nonetheless, the final latency for this system is approximately 27s per pick, which is generally acceptable. Additionally, the latency values reported are based on the UR arm operating at 30% speed for safety reasons. There remains potential for further improvement with advanced engineering

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for robotic task execution, the method comprising:
receiving (202), by a robotic controller executed by one or more hardware processors, a validated task plan from a task planning framework, wherein the task planning framework provides the validated task plan for low level execution of a task originating from a user instruction or a goal from a plurality of modalities;
extracting (204), by the robotic controller, a set of skills comprising a combination of sequential and parallel skills for execution of the validated task plan from among a plurality of skill capabilities of the robotic controller, wherein each skill among the set of sequential or parallel skills comprises a plurality of atomic skills or compound skills or a combination thereof;
loading (206), by the robotic controller, from a skill specific node library, a set of provisioned skill specific behaviour tree (BT) nodes for the extracted set of skills;
extracting (208), by the robotic controller, a set of skills from a skill library defining execution of the extracted set of skills;
creating and loading (210), by the robotic controller, a BT train for the set of skills based on the set of skill ledgers and the set of provisioned skill specific BT nodes, wherein for each skill among the set of skills, the BT train defines a multi-level failure handling mechanism comprising:
a set of preconfigured failures;
a set of failure types comprising hardware failures and software failures; and
a set of failure handlers, wherein the hardware failures are handled with one or more pre-defined actions and the software level failures are handled by triggering one or more auto correction steps defined during a skill configuration;
detecting and handling (212) a failure event by a multi-level failure handler associated with the robotic controller, during execution of the validated task in accordance with the BT train, wherein a replanning of the validated task is routed by the multi-level failure handler to one of a robotic controller stage and a task planning framework stage based on a detected failure mapping to one among the set of preconfigured failures and a failure handling capability of the robotic controller; and
generating (214) a mitigation strategy, by the robotic controller, by analysing and classifying the one or more failure events based on the node of the BT at which failure is detected.

2. The processor implemented method as claimed in claim 1, wherein the robotic controller is coupled to the task planning framework comprising one of a Large Language Model (LLM) or a Vision Language Model (VLM) via a State-resilient Latency-free Lightweight (SLL) bridge that re-routes a plurality of states of the robot to a User Interface (UI) through a State-to-Element Adapter, wherein the plurality of states are identified via a Stateful engine.

3. The processor implemented method as claimed in claim 1, wherein the LLM, when the LLM is a LLM- Robotic System Planning Framework (RSPF), generates the the validated task plan by:
receiving a user instruction in natural language through a Human-Robot User Interface (UI) of the LLM-RSPF;
generating a task plan using a chain of hierarchical thought (CoHT) prompt structure augmented with a robotic system ontology configured for domain-specific task planning and approach for prompt tuning; and
validating the task plan using one or more heuristics checks for presence of predefined one or more unsafe operations to generate the validated task plan.

4. The processor implemented method as claimed in claim 1, wherein the robotic controller orchestrates a human in the loop provision through a Human-Robot User Interface (UI) for improvement of the performance of the system.

5. A system (100) for robotic task execution, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) executing a robotic controller (202) are configured by the instructions to:
receive, by a robotic controller, a validated task plan from a task planning framework, wherein the task planning framework provides the validated task plan for low level execution of a task originating from a user instruction or a goal from a plurality of modalities;
extract, by the robotic controller, a set of skills comprising a combination of sequential and parallel skills for execution of the validated task plan from among a plurality of skill capabilities of the robotic controller, wherein each skill among the set of sequential or parallel skills comprises a plurality of atomic skills or compound skills or a combination thereof;
load, by the robotic controller, from a skill specific node library, a set of provisioned skill specific behaviour tree (BT) nodes for the extracted set of skills;
extract, by the robotic controller, a set of skills from a skill library defining execution of the extracted set of skills;
create and load, by the robotic controller, a BT train for the set of skills based on the set of skill ledgers and the set of provisioned skill specific BT nodes, wherein for each skill among the set of skills, the BT train defines a multi-level failure handling mechanism comprising:
a set of preconfigured failures;
a set of failure types comprising hardware failures and software failures; and
a set of failure handlers, wherein the hardware failures are handled with one or more pre-defined actions and the software level failures are handled by triggering one or more auto correction steps defined during a skill configuration;
detect and handle a failure event by a multi-level failure handler associated with the robotic controller (202), during execution of the validated task in accordance with the BT train, wherein a replanning of the validated task is routed by the multi-level failure handler to one of a robotic controller stage and a task planning framework stage based on a detected failure mapping to one among the set of preconfigured failures and a failure handling capability of the robotic controller; and
generate a mitigation strategy by analysing and classifying the one or more failure events based on the node of the BT at which failure is detected.

6. The system as claimed in claim 5, wherein the robotic controller (202) is coupled to the task planning framework (110A) comprising one of a Large Language Model (LLM) or a Vision Language Model (VLM) via a State-resilient Latency-free Lightweight (SLL) bridge that re-routes a plurality of states of the robot to a User Interface (UI) (106A) through a State-to-Element Adapter, wherein the plurality of states are identified via a Stateful engine.

7. The system as claimed in claim 5, wherein the LLM, when the LLM is a LLM- Robotic System Planning Framework (RSPF), generates the validated task plan by:
receiving a user instruction in natural language through a Human-Robot User Interface (UI) (106A) of the LLM-RSPF;
generating a task plan using a chain of hierarchical thought (CoHT) prompt structure augmented with a robotic system ontology configured for domain-specific task planning and approach for prompt tuning; and
validating the task plan using one or more heuristics checks for presence of predefined one or more unsafe operations to generate the validated task plan.

8. The system as claimed in claim 5, wherein the robotic controller orchestrates a human in the loop provision through a Human-Robot User Interface (UI) for improvement of the performance of the system.

9. One or more non-transitory machine-readable information storage mediums comprising one or more instructions which when executed by one or more hardware processors cause:
receiving, by a robotic controller, a validated task plan from a task planning framework, wherein the task planning framework provides the validated task plan for low level execution of a task originating from a user instruction or a goal from a plurality of modalities;
extracting, by the robotic controller, a set of skills comprising a combination of sequential and parallel skills for execution of the validated task plan from among a plurality of skill capabilities of the robotic controller, wherein each skill among the set of sequential or parallel skills comprises a plurality of atomic skills or compound skills or a combination thereof;
loading, by the robotic controller, from a skill specific node library, a set of provisioned skill specific behaviour tree (BT) nodes for the extracted set of skills;
extracting, by the robotic controller, a set of skills from a skill library defining execution of the extracted set of skills;
creating and loading, by the robotic controller, a BT train for the set of skills based on the set of skill ledgers and the set of provisioned skill specific BT nodes, wherein for each skill among the set of skills, the BT train defines a multi-level failure handling mechanism comprising:
a set of preconfigured failures;
a set of failure types comprising hardware failures and software failures; and
a set of failure handlers, wherein the hardware failures are handled with one or more pre-defined actions and the software level failures are handled by triggering one or more auto correction steps defined during a skill configuration;
detecting and handling a failure event by a multi-level failure handler associated with the robotic controller, during execution of the validated task in accordance with the BT train, wherein a replanning of the validated task is routed by the multi-level failure handler to one of a robotic controller stage and a task planning framework stage based on a detected failure mapping to one among the set of preconfigured failures and a failure handling capability of the robotic controller; and
generating a mitigation strategy by analysing and classifying the one or more failure events based on the node of the BT at which failure is detected.

10. The one or more non-transitory machine-readable information storage mediums as claimed in claim 9, wherein the robotic controller is coupled to the task planning framework comprising one of a Large Language Model (LLM) or a Vision Language Model (VLM) via a State-resilient Latency-free Lightweight (SLL) bridge that re-routes a plurality of states of the robot to a User Interface (UI) through a State-to-Element Adapter, wherein the plurality of states are identified via a Stateful engine.

11. The one or more non-transitory machine-readable information storage mediums as claimed in claim 9, wherein the LLM, when the LLM is a LLM-Robotic System Planning Framework (RSPF), generates the the validated task plan by:
receiving a user instruction in natural language through a Human-Robot User Interface (UI) of the LLM-RSPF;
generating a task plan using a chain of hierarchical thought (CoHT) prompt structure augmented with a robotic system ontology configured for domain-specific task planning and approach for prompt tuning; and
validating the task plan using one or more heuristics checks for presence of predefined one or more unsafe operations to generate the validated task plan.

12. The one or more non-transitory machine-readable information storage mediums as claimed in claim 9, wherein the robotic controller orchestrates a human in the loop provision through a Human-Robot User Interface (UI) for improvement of the performance of the system.
